# EUROPEAN PATENT APPLICATION

(11) **EP 4 722 911 A1**
(43) Date of publication of application: **08.04.2026**
(21) Application number: 24858119.1
(22) Date of filing: 17.07.2024
(51) Int. Cl.: G06F 9/50

(54) **SYSTEM SERVICE CONTROL METHOD, ELECTRONIC DEVICE, AND READABLE STORAGE MEDIUM**

(30) Priority: 29.08.2023 CN 202311103510
(71) Applicant: Huawei Technologies Co., Ltd., Shenzhen, Guangdong 518129 (CN)
(72) Inventor: MA, Jiajun, Shenzhen, Guangdong 518129 (CN)
(74) Representative: Pfenning, Meinig & Partner mbB
(86) International application number: PCT/CN2024/105993
(87) International publication number: WO 2025/044575

(57) **Abstract**

This application provides a system service control method, an electronic device, and a readable storage medium. A system service management module receives a running stop request from a system service; in response to the running stop request, the system service management module determines a first node corresponding to the system service and a second node corresponding to the first node; the system service management module deletes the second node; the system service management module updates a reference count of the first node based on a quantity of deleted second nodes; and the system service updates a reference count of the system service and stops running when the reference count of the system service is less than a count threshold. In this application, the system service may actively request to stop running, to reduce occupation of a resource of the electronic device by the system service, and increase an available resource of the electronic device.

## Description

This application claims priority to Chinese Patent Application No. 202311103510.7, filed with the China National Intellectual Property Administration on August 29, 2023 and entitled "SYSTEM SERVICE CONTROL METHOD, ELECTRONIC DEVICE, AND READABLE STORAGE MEDIUM", which is incorporated herein by reference in its entirety.

### TECHNICAL FIELD

This application relates to the field of system service technologies, and in particular, to a system service control method, an electronic device, and a readable storage medium.

### BACKGROUND

As functions of an electronic device continuously increase, system services in the electronic device continuously increase, and the system services may provide various services for a user. Currently, the system services in the electronic device may be resident services. These resident services occupy a large quantity of resources of the electronic device, and even cause freezing of an application running in the foreground.

Currently, a method for controlling system service running is urgently needed to reduce occupation of the resources of the electronic device by the system services.

### SUMMARY

Embodiments of this application provide a system service control method, an electronic device, and a readable storage medium. A system service may actively request to stop running to release a resource occupied by the system service. This can reduce occupation of the resource of the electronic device by the system service.

According to a first aspect, an embodiment of this application provides a system service control method. The method may be executed by an electronic device or a chip in an electronic device. The following uses the electronic device as an example for description. The electronic device includes a system service, a system service management module, and a service requester. The system service management module includes a first node corresponding to the system service and a second node corresponding to the service requester, where the first node corresponds to the second node.

In some embodiments, the service requester may be an application in the electronic device.

It should be understood that, in a process in which the service requester sends a request to the system service to use the system service, the system service management module may create, in the system service management module, the first node corresponding to the system service and the second node corresponding to the service requester, and establish a mapping relationship between the first node and the second node, in other words, the first node corresponds to the second node. That the first node corresponds to the second node may represent that the service requester corresponding to the second node requests the system service corresponding to the first node.

The electronic device may run a service process, the system service may run in the service process, and at least one system service may run in the service process. In some embodiments, at least two system services may run in the service process. In this scenario, a plurality of system services run in a same service process. Regardless of a scenario in which a plurality of system services run in a same service process or a scenario in which one system service runs in one service process, in this embodiment of this application, the system service may actively request to stop running.

In the method, the system service may send a running stop request to the system service management module. In response to the running stop request, the system service management module determines the first node corresponding to the system service and the second node corresponding to the first node. The system service management module may delete the second node, and the system service management module may update a reference count of the first node based on a quantity of deleted second nodes. Because the first node corresponds to the system service, the system service may update a reference count of the system service based on the reference count of the first node, and stop running when the reference count of the system service is less than a count threshold.

Each time a service requester is added to request to use (or reference) the system service, the reference count of the system service may be increased by 1. Similarly, that the system service management module deletes the second node represents a decrease in service requesters that request to use the system service. Therefore, the system service management module may update the reference count of the first node based on the quantity of deleted second nodes, and the system service may also update the reference count of the system service. When the reference count of the system service is less than the count threshold, it represents that all service requesters terminate referencing the system service, and the system service may stop running. For example, the count threshold may be 1.

In this embodiment of this application, the system service may actively request to stop running, and the system service management module may release the system service. In this embodiment of this application, when a plurality of system services (that is, system services) or one system service runs in one service process, and the service process does not stop, any one of the system services may actively stop running. This can reduce occupation of a resource of the electronic device by the system service, and increase an available resource of the electronic device.

In a possible implementation, the system service may send the running stop request to the system service management module when all the service requesters terminate referencing the system service. When all the service requesters terminate referencing the system service, it represents that currently no service requester references the system service provided by the system service. Therefore, the system service may request to stop running. In this way, a task executed by the service requester is not affected, and a task exception of the service requester is avoided. For example, there are a plurality of service requesters that reference the system service. The system service may send the running stop request to the system service management module when all the plurality of service requesters terminate referencing the system service.

In a possible implementation, the system service may send, based on a feature of executing a task by the system service, the running stop request to the system service management module when the system service determines not to execute the task. When the system service does not execute the task, in other words, currently no service requester uses the system service provided by the system service, the system service may request to stop running. This can also avoid the task exception of the service requester.

For example, the system service is an upgrade system service. If the upgrade system service completes execution of an upgrade task, the upgrade system service determines that the upgrade task is not executed in a short time. Therefore, the upgrade system service may request to stop running. The upgrade task may include, for example, but is not limited to, a system version upgrade and a system application version upgrade.

For example, the system service is a Bluetooth system service. When the Bluetooth system service determines that a Bluetooth option of the electronic device has been turned off, or the electronic device does not establish a Bluetooth connection to another electronic device, the Bluetooth system service determines not to execute a task. Therefore, the Bluetooth system service may request to stop running. For example, a user may operate the Bluetooth option or a Bluetooth control of the electronic device, turn off the Bluetooth option of the electronic device, and cause the electronic device to disable a Bluetooth communication function.

For example, the system service is a Wi-Fi system service. When the Wi-Fi system service determines that a Wi-Fi option of the electronic device has been turned off, or the electronic device does not establish a Wi-Fi connection to another electronic device, the Wi-Fi system service determines not to execute a task. Therefore, the Wi-Fi system service may request to stop running. For example, a user may operate the Wi-Fi option or a Wi-Fi control of the electronic device, turn off the Wi-Fi option of the electronic device, and cause the electronic device to disable a Wi-Fi function.

For example, the system service is a system service used to provide a distributed service. When the system service determines that a communication option of the electronic device has been turned off, or the electronic device does not establish a communication connection to another electronic device, the system service determines not to execute a task. For example, the distributed service may include any one of the following: a distributed camera, a distributed clipboard, a distributed gallery, and a distributed canvas. For example, a user may operate the communication option of the electronic device to turn off the communication option. The communication option may include but is not limited to a Wi-Fi option, a Bluetooth option, a mobile cellular network option, and the like, to cause the electronic device to disable a function of the another electronic device.

In some embodiments, the distributed camera is used as an example. For example, the electronic device may include a distributed camera application. When the distributed camera application runs, a distributed camera system service may be called to implement a function of the distributed camera application.

It should be understood that different types of system services have different conditions for determining not to execute a task. In some embodiments, a trigger condition used when each system service determines not to execute a task may be preset. The system service may detect, based on the trigger condition of the system service, whether to execute the task. When the system service determines not to execute the task, the system service may send the running stop request to the Binder driver.

In this implementation, the system service may actively request to stop running when determining that all the service requesters terminate referencing the system service, or when the system service determines, based on the task feature of the system service, not to execute the task. In this way, normal task execution of the system service is not affected, and the available resource of the electronic device can be further increased.

In a possible implementation, when the electronic device implements cross-process communication by using an inter-process communication (inter-process communication, IPC) technology, the system service management module includes the Binder driver.

The system service may send the running stop request to the Binder driver. The Binder driver determines the first node corresponding to the system service, and determines, based on an association relationship between the first node and the second node, the second node corresponding to the first node. For example, the Binder driver may store the association relationship between the first node and the second node by using a data structure like a red-black tree, a map linked list, or an array.

In some embodiments, when the Binder driver stores the association relationship between the first node and the second node by using the red-black tree, the red-black tree may store information about the first node, and the information about the first node may include the second node corresponding to the first node. That the first node corresponds to the second node may be understood as follows: A system service corresponding to the second node references the system service corresponding to the first node.

The Binder driver may delete the second node, and the Binder driver updates the reference count of the first node based on the quantity of deleted second nodes. In this embodiment of this application, for example, the Binder driver reduces the reference count of the first node based on the quantity of deleted second nodes. It should be understood that, in the Binder driver, the first node corresponds to the system service. The reference count of the first node may represent the reference count of the system service, in other words, may represent a quantity of service requesters that reference (or use) the system service.

After updating the reference count of the first node, the Binder driver may send a reference count update indication to the system service, where the reference count update indication indicates a quantity of reduced reference counts of the system service. The system service updates the reference count of the system service in response to the reference count update indication. When the reference count of the system service is less than the count threshold, the system service stops running, and calls a running stop function to release a resource occupied by the system service.

In some embodiments, the count threshold may be 1. In this embodiment of this application, when the reference count of the system service is 0, the system service stops running, and calls the running stop function to release the resource occupied by the system service.

In some embodiments, that the system service management module may release the system service may be understood as follows: The system service management module may release the resource occupied by the system service. The resource may include but is not limited to a memory resource, a central processing unit CPU resource, a network resource, an input/output resource, and the like.

In a possible implementation, after the Binder driver updates the reference count of the first node based on the quantity of deleted second nodes, the Binder driver may delete the first node when the reference count of the first node is less than the count threshold.

In some embodiments, the count threshold may be 1. In this embodiment of this application, after the Binder driver updates the reference count of the first node based on the quantity of deleted second nodes, the Binder driver may delete the first node when the reference count of the first node is 0.

In a possible implementation, in response to the running stop request from the system service, the Binder driver may determine the first node corresponding to the system service and the second node corresponding to the first node. After determining the second node corresponding to the first node, the Binder driver may send a notification message to the service requester, where the notification message indicates that the system service requests to stop running. The service requester may release the second node. In some embodiments, the service requester may call a release function to release a resource occupied by the second node.

In this implementation, the Binder driver may synchronize, to the service requester, that the system service requests to stop running. In this way, the service requester can perceive that the system service stops running, and the service requester can perform a corresponding operation, to avoid the task exception of the service requester.

In a possible implementation, the Binder driver may not synchronize that the system service requests to stop running to the service requester. In this way, the service requester may not perceive that the system service stops running. This implementation is applicable to the following scenarios to avoid the task exception of the service requester:

In a first scenario, the service requester is configured to re-obtain a handle of the system service each time the system service is used. In this way, even if the system service stops running, when the service requester uses the system service next time, the service requester re-obtains the handle of the system service, and the service requester uses the system service to execute a task. This can ensure smooth execution of the task.

In a second scenario, the service requester may register a listening service in a system ability manager SAMgr in advance, to listen to running stop of the system service. For example, the service requester registers the listening service with the SAMgr, where the listening service is used to listen to running stop of the system service. After releasing the system service, the SAMgr sends a notification message indicating that the system service stops running to the service requester.

In this way, although the Binder driver does not notify the service requester that uses the system service when the system service actively requests to stop running, the service requester may determine, by using the SAMgr, that the system service stops running, to enable the service requester to re-obtain the handle when using the system service next time. Therefore, even if the Binder driver does not notify the service requester that uses the system service, task execution of the service requester is not affected.

In some embodiments, in response to the running stop request from a service provider, the Binder driver may determine the first node corresponding to the service provider and the second node corresponding to the first node. After determining the second node corresponding to the first node, the Binder driver may send a notification message to the SAMgr, where the notification message indicates that the service provider requests to stop running. The SAMgr may release the second node. In some embodiments, the SAMgr may call a release function to release the resource occupied by the second node.

In a possible implementation, a first interface is deployed in the electronic device, and the system service calls the first interface to send the running stop request to the Binder driver. In a possible implementation, a second interface is deployed in the electronic device, and the Binder driver indicates the second node to call the second interface to send the notification message to the service requester.

In some embodiments, the first interface and the second interface may be deployed at a system service layer of the electronic device, or deployed between user space and kernel space.

According to a second aspect, an embodiment of this application provides an electronic device. The electronic device may include a processor and a memory. The memory is configured to store computer-executable program code, and the program code includes instructions. When the processor executes the instructions, the instructions enable the electronic device to perform the method in the first aspect.

According to a third aspect, an embodiment of this application provides an electronic device. The electronic device may include a unit, a module, or a circuit configured to perform the method provided in the first aspect.

According to a fourth aspect, an embodiment of this application provides a computer program product including instructions. When the computer program product runs on a computer, the computer is enabled to perform the method in the first aspect.

According to a fifth aspect, an embodiment of this application provides a computer-readable storage medium. The computer-readable storage medium stores instructions. When the instructions are run on a computer, the computer is enabled to perform the method in the first aspect.

According to a sixth aspect, an embodiment of this application provides a chip. The chip includes a processor and a communication interface. The processor may perform the method in the first aspect by using the communication interface.

For beneficial effect of the possible implementations of the second aspect to the sixth aspect, refer to the beneficial effect brought by the first aspect. Details are not described herein again.

### BRIEF DESCRIPTION OF DRAWINGS

FIG. 1 is a diagram of cross-process communication;
FIG. 2 is a schematic flowchart of a system service control method according to an embodiment of this application;
FIG. 3 is a schematic flowchart of a system service control method according to another embodiment of this application;
FIG. 4 is a schematic flowchart of a system service control method according to another embodiment of this application;
FIG. 5 is a schematic flowchart of a system service control method according to another embodiment of this application; and
FIG. 6 is a diagram of a structure of an electronic device according to an embodiment of this application.

### DESCRIPTION OF EMBODIMENTS

For ease of understanding, the following first describes related terms and concepts in embodiments of this application.

System service (system ability, Sa): The system service may be understood as a system program that provides a specific function and service. For example, the system service may include a system service used to provide and monitor usage of a system resource, a system service used to provide a network service, a system service used to provide a management file, and a system service used to provide security protection.

For example, the usage of the system resource may be central processing unit (central processing unit, CPU) usage, memory usage, or disk space usage. The system service used to provide the network service may be, for example, a Bluetooth service or a Wi-Fi service. The management file may be, for example, a backup file, a compressed file, or an encrypted file. Security protection is, for example, antivirus, a firewall, and intrusion detection. The system service is not limited in embodiments of this application.

In some embodiments, a plurality of types of system services may be deployed in an electronic device. Android is used as an example. An Android system service provides a Java interface and a local interface (native interface), so that an application (application, APP) in the electronic device calls the system service. Based on implementation language of system services, the system services may be classified into a Java system service and a native system service. A system service control method provided in embodiments of this application is applicable to the native system service, the Java system service, and another type of system service. In some embodiments, the local interface may be referred to as the native interface.

Resident: Currently, the system service may be a resident service. It may be understood that in a running process of the electronic device, the system service always runs in a memory, and even if the system service has completed a task, the system service still runs in the memory. In some embodiments, the system service may run in the background.

In some embodiments, some system services may not be resident services, and these system services may run in the memory when needed to be used. For example, for a distributed camera service, the electronic device runs the distributed camera service only after the electronic device and another electronic device are networked, and in this case, the distributed camera service runs in the memory. It should be understood that, regardless of whether the system service is a resident service, the system service control method provided in embodiments of this application is applicable.

Process: A process is a basic unit that is dynamically executed by an operating system. The system service may run in the process. In some embodiments, a process in which a system service runs may be referred to as a service process. In the following embodiments, a "process" is used as an example for description.

In some embodiments, at least one system service may run in one process. Android is used as an example. The native system service may run in a local daemon process. For example, system services such as a media player service mediaplayerservice, a camera service cameraservice, and an audio service audio flinger may run in the local daemon process.

Handle (handle): The handle is a special smart pointer. For example, when an APP needs to reference a memory block or an object managed by another system (for example, a database or an operating system), a handle of the memory block or the object needs to be obtained. In some embodiments, that the APP needs to reference the memory block or the object managed by the another system may be understood as follows: The APP needs to use the memory block or the object managed by the another system.

The electronic device in embodiments of this application is a device on which a system service is deployed, and the electronic device may be referred to as user equipment (user equipment, UE), a terminal (terminal), or the like. For example, the electronic device may be a mobile phone, a tablet computer (tablet), a personal digital assistant (personal digital assistant, PDA), a handheld device having a wireless communication function, a computing device, a vehicle-mounted device or a wearable device, a virtual reality (virtual reality, VR) terminal device, an augmented reality (augmented reality, AR) terminal device, a wireless terminal in industrial control (industrial control), or a wireless terminal in a smart home (smart home). A form of the electronic device is not specifically limited in embodiments of this application.

As functions of the electronic device continuously increase, system services in the electronic device continuously increase. Currently, a large quantity of system services run in the background, and occupy a large quantity of resources of the electronic device. Even a background process in which the system services are located preempts a resource of an application process running in the foreground, causing freezing of the application running in the foreground. The resource of the electronic device may include but is not limited to a memory resource, a CPU resource, a network resource, an input/output (input/output, I/O) resource, and the like.

Currently, when the system service completes a task, there is no mechanism in the electronic device that the system service actively stops running.

In some embodiments, from a perspective of an Android operating system, a Java system service control mechanism is designed for the Java system service. For example, an APP in the electronic device may bind the Java system service by calling a bindService function, to represent that the APP may use the Java system service, and the APP may unbind the Java system service by calling an unbindService function, to represent that the APP stops using the Java system service. In some embodiments, using the system service may also be referred to as referencing the system service or calling the system service.

An activity manager service (activity manager service, AMS) may be used to manage the Java system service. When an APP calls the bindService function to bind the Java system service, the AMS may determine that the APP references the Java system service, and may increase a reference count of the Java system service by 1; and then when another APP calls the bindService function to bind the Java system service, the AMS may increase the reference count of the Java system service by 1. When an APP calls the unbindService function to unbind the Java system service, the AMS may decrease the reference count of the Java system service by 1. In this way, the AMS may update the reference count of the Java system service based on the binding and unbinding operations of the APP.

When the reference count of the Java system service is 0, the AMS may adjust an adj value of a process in which the Java system service is located, and the adj value of the process may represent a priority of the process. For example, when the reference count of the Java system service is 0, the AMS may increase the adj value of the process in which the Java system service is located, to lower the priority of the process. In this example, when the memory of the electronic device is less than a memory threshold, the AMS may kill (kill) the process with the low priority.

In the foregoing example, when the APP always holds a handle of the Java system service, the reference count of the Java system service is not 0, and the AMS cannot process the process in which the Java system service is located and the Java system service. In addition, the AMS manages the Java system service by killing the process in which the Java system service is located. When a plurality of Java system services run in the process, the AMS cannot independently control one Java system service to stop running.

In some embodiments, life cycles of system services are related to a process in which the system services are located. When the process in which the system services are located is dead, the system services running in the process may stop running, and the electronic device may release resources occupied by these system services. The process in which the system services are located may be understood as the process running the system services.

For example, the three system services, namely, the media player service, the camera service, and the audio service, run in one process, and the process may be a local daemon process. Currently, when any one of the media player service, the camera service, and the audio service completes a task of the system service, the system service does not stop running, and the system service still runs in the memory, and occupies a resource of the electronic device. In some embodiments, when the local daemon process is destroyed due to a running error, or the local daemon process is forcibly killed, or life cycles of the three system services, namely, the media player service, the camera service, and the audio service, end, the three system services may stop running.

In some embodiments, a process stop (stop) condition may be further preset. For example, the condition may be that a preset property of the electronic device reaches a specified value. The electronic device may start a property (property) monitoring mechanism. When the process meets the stop condition, the electronic device may stop the process, the system services running in the process may stop running, and the electronic device may release the resources occupied by these system services.

In the foregoing system service control method, when a plurality of system services run in one process, the system services depend on that the process dies or stops, and the system services in the process stops running only when the process dies or stops. The electronic device cannot independently control running of one system service.

To facilitate that the electronic device can independently control running of each system service, in some embodiments, a solution that "one system service runs in one process" may be designed. In this way, when the system service completes a task, the electronic device may kill the process in which the system service is located, and the system service may stop running. However, if one system service runs in one process when there are a large quantity of system services in the electronic device, processes simultaneously started by the electronic device increase, resulting in high power consumption.

For the foregoing problem, embodiments of this application provide a system service control method. When at least one system service runs in one process, when the process is not dead or stopped, any system service in the process may be controlled to stop running, to release a resource occupied by the system service. On one hand, one system service can be separately controlled. On the other hand, a resource that is occupied by the system service and that is of an electronic device can be reduced, and a system running speed of the electronic device can be improved. It should be understood that, in embodiments of this application, "Sa" is used as an English abbreviation of the system service for description.

To better understand the system service control method provided in this application, a cross-process communication principle is first briefly described.

Each process has an independent resource, and another process cannot access a resource of a different process randomly. Therefore, different processes cannot directly communicate with each other. Therefore, a cross-process communication technology is generated. Current, both an inter-process communication (inter-process communication, IPC) technology and a remote procedure call (remote procedure call, RPC) technology can be used to implement cross-process communication. A difference is that the IPC technology uses a Binder driver, and may be used for cross-process communication in a device, and the RPC technology uses a soft bus driver, and may be used for cross-process communication across devices.

In some embodiments, the electronic device may implement cross-process communication in the device by using the IPC technology, the RPC technology, or another communication technology. The following embodiments are described by using an example in which the electronic device implements cross-process communication in the device by using the IPC technology.

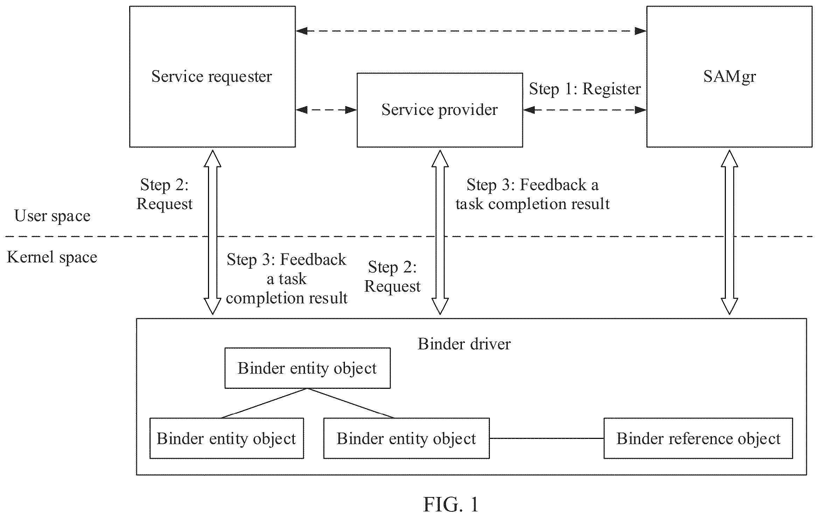

FIG. 1 is a diagram of cross-process communication. Refer to FIG. 1. An electronic device may include a service requester (client), a service provider (server), a system ability manager (system ability manager, SAMgr), and a driver. In some embodiments, the electronic device may include at least one service requester and at least one service provider. In FIG. 1, one service requester and one service provider are used as an example for description.

In some embodiments, when the electronic device uses an IPC technology, the driver in the electronic device may be a Binder driver. When the electronic device uses an RPC technology, the driver in the electronic device may be a soft bus. In FIG. 1, an example in which the driver is the Binder driver is used.

In some embodiments, the service provider may be considered as a Binder service process, the service requester may be considered as a Binder client process, the Binder service process is responsible for processing a request from the Binder client process, and the Binder client process may call, by using an interface provided by the Binder driver, a service running in the Binder service process.

At least one system service may run in the Binder service process. In other words, the service provider may provide the at least one system service. For example, three system services, for example, a media player service, a camera service, and an audio service, run in one process. The process may be a local daemon process. The local daemon process may be considered as a service provider, and the media player service, the camera service, and the audio service may be considered as system services provided by the service provider.

The service requester may request to call the system service. For example, the service requester may be an APP in the electronic device. The APP may include but is not limited to a third-party application and a system application.

In some embodiments, the service requester, the service provider, and the SAMgr may be located in user space of the electronic device, and the Binder driver may be located in kernel space of the electronic device.

In some embodiments, refer to FIG. 1. A process in which the service requester uses system services provided by the service requester may include the following steps.

### Step 1: Register.

The system services may be registered in the SAMgr first. In some embodiments, after a process (for example, the Binder service process) in which the system services are located is started, the system services may be registered in the SAMgr by calling an addSystemAbility function.

The SAMgr is responsible for managing these system services and providing a relevant interface for the service requester.

### Step 2: Request.

If the service requester wants to use a system service in the service provider, the service requester may send a request to the Binder driver.

In response to the request from the service requester, the Binder driver may communicate with the service provider requested by the service requester.

In step 2, in response to the request from the service requester, the Binder driver may send the request to the system service running in the service provider. For example, the request may be used to request CPU usage and memory usage. Correspondingly, the system service may be a system service used to provide and monitor usage of a system resource.

The system service may process the received request and execute a task. For example, in response to the request from the Binder driver, the system service used to provide and monitor the usage of the system resource may obtain the CPU usage and the memory usage.

### Step 3: Report a task completion result.

After the system service completes executing the task, the service provider may return the task completion result to the service requester by using the Binder driver. For example, the task completion result may include the CPU usage and the memory usage.

It should be noted that, in FIG. 1, dashed lines are used to represent interaction between the service requester, the service provider, and the SAMgr. In essence, interaction between the service requester, the service provider, and the SAMgr is performed by using the Binder driver.

In some embodiments, an interface may be disposed. The interface may be, for example, an ioctl interface. The service requester, the service provider, and the SAMgr may call the ioctl interface to communicate with the Binder driver, so as to implement interaction between the service requester, the service provider, and the SAMgr.

The process in which the service requester uses the system services provided by the service requester and the cross-process communication principle are not described in detail in embodiments of this application. For details, refer to descriptions of a current cross-process communication principle.

In some embodiments, interfaces used for inter-process communication may be deployed on the Binder driver, and the service requester may communicate with the service provider by calling these interfaces.

The following describes a data structure of the Binder driver.

In some embodiments, the Binder driver may include a Binder entity object and a Binder reference object.

Binder entity object: Each system service corresponds to one Binder entity object in the Binder driver, and the Binder entity object may be referred to as a Binder_node. In other words, the Binder driver includes the one Binder entity object corresponding to each system service. In some embodiments, the Binder entity object may be referred to as a first node.

Refer to FIG. 1. An example in which three system services run in one Binder service process is used for description in FIG. 1. Correspondingly, each system service corresponds to one Binder entity object, and the Binder service process (the service provider) may correspond to three Binder entity objects. The Binder driver may include the three Binder entity objects corresponding to the Binder service process.

Binder reference object: Each service requester corresponds to one Binder reference object in the Binder driver, and the Binder reference object may be referred to as Binder_ref, where ref may be an English abbreviation of reference. In some embodiments, the Binder reference object may be referred to as a second node.

In some embodiments, the Binder driver may create the Binder entity object corresponding to each system service. In some embodiments, when the service requester requests to use a system service, the Binder driver may create a Binder reference object of the service requester, and correspond the Binder reference object of the service requester to a Binder entity object of the system service used by the service requester. For example, the Binder driver may store a correspondence between the Binder reference object of the service requester and the Binder entity object of the system service used by the service requester.

Refer to FIG. 1. An APP is used as an example. The Binder driver may include a Binder reference object corresponding to the APP. For example, the APP references a system service in the Binder service process. In the Binder driver, a Binder entity object of the system service may correspond to the Binder reference object of the APP. For example, in FIG. 1, that the Binder entity object is connected to the Binder reference object represents that the Binder entity object of the system service may correspond to the Binder reference object of the APP.

In some embodiments, one Binder reference object may correspond to at least one Binder entity object. For example, one APP may use at least one system service, and a Binder reference object of the APP in the Binder driver may correspond to a Binder entity object of the at least one system service in the Binder driver. For example, when a navigation APP runs, a system service 1 used to provide positioning and a system service 2 used to play an audio may be used. For example, the system service 1 corresponds to a Binder entity object 1, the system service 2 corresponds to a Binder entity object 2, and the navigation APP corresponds to a Binder reference object 1. In this case, in the Binder driver, the Binder reference object 1 may correspond to the Binder entity object 1 and the Binder entity object 2.

In some embodiments, one Binder entity object may correspond to at least one Binder reference object. For example, one system service may be simultaneously used by a plurality of APPs, and a Binder entity object of the system service in the Binder driver may correspond to Binder reference objects of the plurality of APPs in the Binder driver. For example, both a navigation APP and a video playback APP use a system service 1 used to provide positioning, the system service 1 corresponds to a Binder entity object 1, the navigation APP corresponds to a Binder reference object 1, and the video playback APP corresponds to a Binder reference object 2. In this case, in the Binder driver, the Binder entity object 1 may correspond to the Binder reference object 1 and the Binder reference object 2.

The following describes, with reference to specific embodiments, the system service control method provided in embodiments of this application. The following several embodiments may be combined with each other, and a same or similar concept or process may not be described repeatedly in some embodiments.

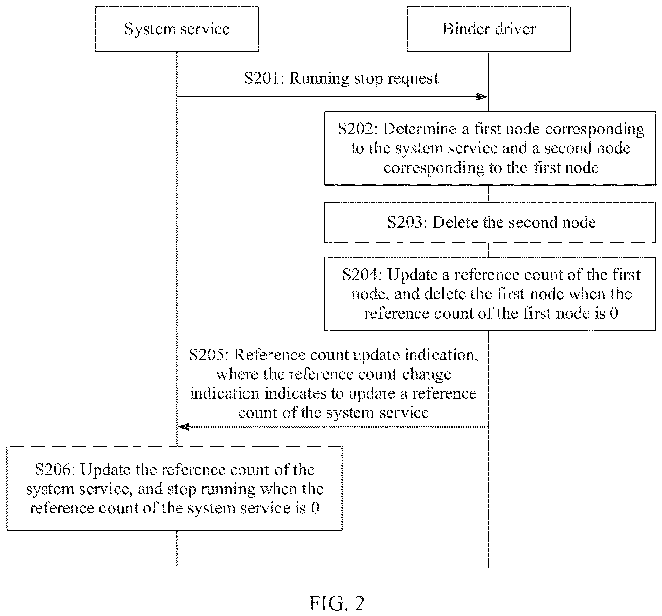

FIG. 2 is a schematic flowchart of a system service control method according to an embodiment of this application. Refer to FIG. 2. The system service control method provided in this embodiment of this application may include the following steps.

S201: A system service sends a running stop request to a Binder driver.

In some embodiments, a first interface may be deployed in an electronic device, and the system service may call the first interface to send the running stop request to the Binder driver. For example, the first interface may be a function interface. For example, the system service may call a ReleaseSa function to send the running stop request to the Binder driver by using the first interface. In some embodiments, the first interface may be deployed at a system service layer of the electronic device. In some embodiments, the first interface may be deployed between user space and kernel space of the electronic device. In some embodiments, the first interface may be deployed on the Binder driver.

In some embodiments, the system service may send the running stop request to the Binder driver when all service requesters terminate referencing the system service.

When the service requester references the system service, the service requester may send a request to the system service (or a service provider to which the system service belongs) by using the Binder driver. Refer to the descriptions in FIG. 1. The system service may send the running stop request to the Binder driver when all the service requesters terminate referencing the system service.

In some embodiments, the service requester may send the request to the system service by using the Binder driver. In this example, because the service requester references the system service, the system service may execute a task requested by the first service requester. After the system service completes the task, the system service may send the running stop request to the Binder driver if the service requester terminates referencing the system service.

In some embodiments, that all the service requesters terminate referencing the system service may be understood as follows: No service requester references the system service. After the system service completes the task, the system service may send the running stop request to the Binder driver if no service requester uses the system service within preset time. The preset time can give some buffer time for the system service. In this way, a problem that the system service is frequently switched between stopping running and starting running when a service requester requests to use the system service in a short period of time can be avoided.

In some embodiments, a SAMgr may manage the system service. When a service requester requests to use the system service, the SAMgr may count a quantity of reference times of the system service, to obtain a reference count of the system service. Each time a service requester is added to request to use the system service, the SAMgr may increase the reference count of the system service by 1. When a service requester stops using the system service, the SAMgr may decrease the reference count of the system service by 1.

In this embodiment of this application, the system service may obtain the reference count of the system service stored in the SAMgr. When the reference count of the system service is 0, the system service may send the running stop request to the Binder driver.

In some embodiments, the system service may manage the reference count of the system service. Each time a service requester is added to request to use the system service, the system service may increase the reference count of the system service by 1. Each time a service requester stops using the system service, the system service may decrease the reference count of the system service by 1.

In this embodiment of this application, the system service may determine the reference count of the system service. When the reference count of the system service is 0, the system service may send the running stop request to the Binder driver.

In some embodiments, for example, the service requester actually does not need to request the system service to execute the task. However, due to reasons such as an application startup setting, once the service requester is started, the service requester obtains a handle of the system service, and sends the request to the system service. In these examples, the service requester does not really use the system service, but there may also be a case in which the service requester requests to use the system service. For this case, if the system service does not execute the task, normal running of the service requester is not affected. If the system service still runs in a memory, a resource of the electronic device is also occupied.

The example scenario is described herein by using an example. For example, when an audio APP is started, the audio APP sends a request to a media player service by using the Binder driver, to request to use the system service. However, actually, the media player service is used to play an audio only when the audio APP play the audio. Therefore, the audio APP holds a handle of the media player service when the audio APP is started. As a result, the media player service considers that the media player service is always used by the service requester, and the media player service keeps running in the memory, occupying a system resource.

Therefore, to resolve this problem, in some embodiments, when the system service determines, based on a task feature of the system service, not to execute the task, the system service may send the running stop request to the Binder driver.

The system service is, for example, a system service used to provide a version upgrade. In some embodiments, the system service used to provide the version upgrade may be referred to as an upgrade system service. After completing a version upgrade task, the upgrade system service may determine that the version upgrade task does not need to be executed in a period of time, and the upgrade system service may send a running stop request to the Binder driver. It should be understood that the version upgrade may include but is not limited to a system version upgrade, a system APP version upgrade, and the like. In some embodiments, the system version upgrade may also be referred to as an entire system version upgrade.

The system service is, for example, a system service used to provide Bluetooth communication. In some embodiments, the system service used to provide Bluetooth communication may be referred to as a Bluetooth system service. For example, when the Bluetooth system service determines that a Bluetooth option of the electronic device has been turned off, the Bluetooth system service determines that a Bluetooth communication task does not need to be executed. Therefore, the Bluetooth system service may send a running stop request to the Binder driver. A user may turn off the Bluetooth option of the electronic device. For example, in a drop-down menu on the desktop of the electronic device, where the drop-down menu includes a Bluetooth control or the Bluetooth option, and the Bluetooth option is used as an example, the user may operate the Bluetooth option to turn off the Bluetooth option of the electronic device. Correspondingly, the electronic device may disable a Bluetooth communication function. In this example, for example, the service requester holds the handle of the system service when the service requester is started, but the system service determines, based on the task feature of the system service, that the user has disabled a Bluetooth function of the electronic device. In this case, actually, no service requester uses the Bluetooth system service. Therefore, the system service may send the running stop request to the Binder driver.

For example, for the Bluetooth system service, for example, although the Bluetooth option of the electronic device is in an enabled state, the electronic device does not perform a Bluetooth connection to another electronic device. In this case, actually, no service requester uses the Bluetooth system service. Therefore, the Bluetooth system service may send the running stop request to the Binder driver.

The system service is, for example, a system service used to provide Wi-Fi communication. In some embodiments, the system service used to provide Wi-Fi communication may be referred to as a Wi-Fi system service. For example, when the Bluetooth system service determines that a Wi-Fi option of the electronic device has been turned off, the Wi-Fi system service determines that a Wi-Fi communication task does not need to be executed. Therefore, the Wi-Fi system service may send a running stop request to the Binder driver. For a manner in which the user turns off the Wi-Fi option of the electronic device, refer to the related descriptions of the Bluetooth option. In this example, for example, the service requester holds the handle of the system service when the service requester is started, but the system service determines, based on the task feature of the system service, that the Wi-Fi option of the electronic device has been turned off. In this case, actually, no service requester uses the Wi-Fi system service. Therefore, the system service may send the running stop request to the Binder driver.

Similarly, for the Wi-Fi system service, for example, although the Wi-Fi option of the electronic device is in an enabled state, the electronic device does not perform a Wi-Fi connection to another electronic device. In this case, actually, no service requester uses the Wi-Fi system service. Therefore, the Wi-Fi system service may send the running stop request to the Binder driver.

The system service is, for example, a system service used to provide a distributed service. The distributed service may include, for example, but is not limited to, a distributed camera, a distributed clipboard, a distributed gallery, and a distributed canvas. In some embodiments, the distributed camera is used as an example. For example, the electronic device may include a distributed camera application. When the distributed camera application runs, a distributed camera system service may be called to implement a function of the distributed camera application.

The distributed service needs to be implemented after a plurality of electronic devices are networked, where a networking manner may include but is not limited to Wi-Fi networking, Bluetooth networking, and the like. In this example, for example, a communication option of the electronic device has been turned off, and the electronic device cannot connect to another electronic device. The electronic device determines that a task related to the distributed service does not need to be executed, and the system service used to provide the distributed service may send a running stop request to the Binder driver. For example, the communication option may include but is not limited to the Bluetooth option, the Wi-Fi option, and a mobile cellular network option. For a manner of turning off the communication option, refer to the related descriptions of the Bluetooth option.

In addition, for example, although the user turns on the communication option of the electronic device, the electronic device actually does not perform a communication connection to another electronic device. In this case, actually, the task related to the distributed service is not executed. Therefore, the system service used to provide the distributed service may send the running stop request to the Binder driver.

In some embodiments, a trigger condition used when each system service determines not to execute a task may be preset. The system service may detect, based on the trigger condition of the system service, whether to execute the task. When the system service determines not to execute the task, the system service may send the running stop request to the Binder driver. For example, a trigger condition for the upgrade system service to determine not to execute a task may be completing an upgrade task. For example, a trigger condition for the Bluetooth system service to determine not to execute a task may be that the Bluetooth option of the electronic device has been turned off, or the electronic device does not establish the Bluetooth connection to the another electronic device. For example, the trigger condition for the Wi-Fi system service to determine not to execute a task may be that the Wi-Fi option of the electronic device has been turned off, or the electronic device does not establish the Wi-Fi connection to the another electronic device.

S202: The Binder driver determines a first node corresponding to the system service and a second node corresponding to the first node.

In some embodiments, the Binder driver may store the first node corresponding to the system service, and the first node is, for example, a Binder entity object. The Binder driver may further store the second node corresponding to the first node. In response to the running stop request from the system service, the Binder driver may determine, in the Binder driver, the first node corresponding to the system service and the second node corresponding to the first node.

In some embodiments, the Binder driver may store an association relationship between the first node and the second node, and the association relationship between the first node and the second node indicates the second node corresponding to the first node. In some embodiments, the Binder driver may store the association relationship between the first node and the second node by using a data structure like a red-black tree, a map map linked list, or an array.

In some embodiments, when the Binder driver stores the association relationship between the first node and the second node by using the red-black tree, the red-black tree may store information about the first node corresponding to the system service.

In some embodiments, the information about the first node may include information about the second node corresponding to the first node, and the information about the second node may include an identifier of the second node, creation time of the second node, and the like. This is not limited in embodiments of this application.

In some embodiments, the information about the first node may include the information about the second node corresponding to the first node and reference count information of the first node. The reference count information of the first node may include a reference count of the first node, and the reference count of the first node may be the same as the reference count of the system service. For example, each time a second node is added to correspond to the first node, the Binder driver may increase the reference count of the first node by 1. Each time a service requester releases a second node corresponding to the first node, the Binder driver may decrease the reference count of the first node by 1.

The Binder driver may determine, based on the information about the first node in the red-black tree, the second node corresponding to the first node.

S203: The Binder driver deletes the second node.

For example, a Binder entity object 1 may correspond to a Binder reference object 1 and a Binder reference object 2. The Binder entity object 1 may serve as the first node, and both the Binder reference object 1 and the Binder reference object 2 may serve as second nodes. In response to receiving a running stop request of a system service from the Binder entity object 1, the Binder driver may delete the Binder reference object 1 and the Binder reference object 2 that correspond to the Binder entity object 1.

S204: The Binder driver updates the reference count of the first node, and the Binder driver deletes the first node when the reference count of the first node is 0.

Each time a second node is added to correspond to the first node, the Binder driver may increase the reference count of the first node by 1. After the Binder driver deletes the second node, the Binder driver may update the reference count of the first node based on a quantity of deleted second nodes. For example, when the Binder driver deletes one second node, the Binder driver may decrease the reference count of the first node by 1. When the Binder driver deletes two second nodes, the Binder driver may decrease the reference count of the first node by 2.

When the reference count of the first node is 0, it represents that no service requester currently uses the system service, and the Binder driver may delete the first node corresponding to the system service.

S205: The Binder driver sends a reference count update indication to the system service, where the reference count change indication indicates to update the reference count of the system service.

In some embodiments, after updating the reference count of the first node, the Binder driver may send the reference count update indication to the system service. The reference count change indication indicates to update the reference count of the system service.

In some embodiments, the reference count change indication may include an indication of a decreased or increased reference count of the system service. For example, the Binder driver decreases the reference count of the first node by 1. In this case, the reference count change indication may include an indication of a decreased reference count 1 of the system service, in other words, the reference count change indication indicates the system service to decrease the reference count of the system service by 1.

In some embodiments, when the SAMgr manages the reference count of the system service, after updating the reference count of the first node, the Binder driver may send the reference count update indication to the SAMgr, to indicate the SAMgr to update the reference count of the system service.

S206: The system service updates the reference count of the system service in response to the reference count change indication, and the system service stops running when the reference count of the system service is 0.

The system service may update the reference count of the system service based on the reference count change indication. For example, the reference count change indication may include the indication of the decreased reference count 1 of the system service, and the system service may decrease the reference count of the system service by 1 based on the reference count change indication.

When the reference count of the system service is 0, it represents that all the service requesters terminate referencing the system service, and the system service may stop running. In some embodiments, that the system service stops running may be understood as follows: The system service stops running, and system service recycling is triggered to release a resource occupied by the system service. In some embodiments, that the system service stops running may be understood as follows: The system service exits or is uninstalled from a process.

In some embodiments, when the reference count of the system service is 0, the system service may call a running stop function to trigger system service recycling, to release the resource occupied by the system service. In some embodiments, the running stop function may be, for example, an OnReleaseObject function.

In some embodiments, when the SAMgr manages the reference count of the system service, the SAMgr may update the reference count of the system service. When the reference count of the system service is 0, the SAMgr may call the OnReleaseObject function to trigger system service recycling, to release the resource occupied by the system service.

In this embodiment of this application, when the system service determines that all the service requesters terminate referencing the system service, or the system service determines, based on the task feature of the system service, not to execute the task, the system service may actively initiate the running stop request to the Binder driver. The Binder driver may update the reference count of the first node corresponding to the system service, and trigger the system service to update the reference count of the system service. When the reference count of the system service is 0, the system service may stop running, and triggers release of the resource occupied by the system service. In this embodiment of this application, when a plurality of system services run in one process, and the process is not stopped, when any one of the system services completes a task or does not execute a task, the system service may actively stop running. On one hand, task execution of another system service may not be affected, and on the other hand, the electronic device may release the resource occupied by the system service. This increases an available resource of the electronic device.

In some embodiments, when the system service actively stops running, the Binder driver may further notify the service requester that uses the system service, so that the service requester can perceive that the system service stops running. Further, the service requester can perform a corresponding operation, to avoid a task exception of the service requester.

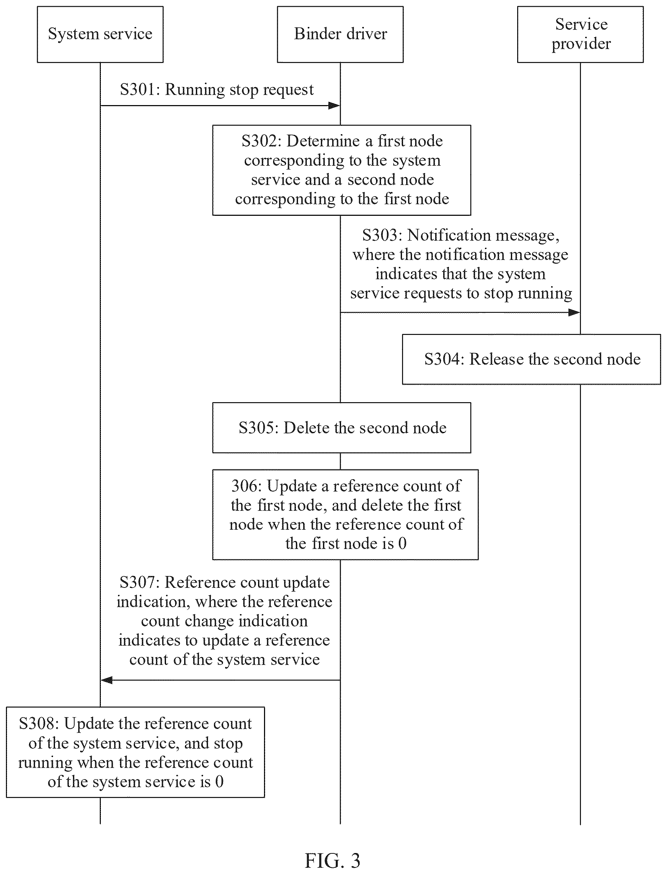

In this embodiment, refer to FIG. 3. A system service control method provided in an embodiment of this application may include the following steps.

S301: A system service sends a running stop request to a Binder driver.

S302: The Binder driver determines a first node corresponding to the system service and a second node corresponding to the first node.

For S301 and S302, refer to the descriptions in S201 and S202.

S303: The Binder driver sends a notification message to a service requester corresponding to the second node, where the notification message indicates that the system service requests to stop running.

In some embodiments, a second interface may be deployed in an electronic device, and the Binder driver may call the second interface to send the notification message to the service requester corresponding to the second node. For example, the second interface may be a function interface. For example, the Binder driver may indicate the second node to call back an OnSaRelease function, so that the Binder driver sends, by using the second interface, the notification message to the service requester corresponding to the second node. For a deployment manner of the second interface, refer to the related descriptions of a first interface.

The notification message indicates that the system service requests to stop running, or may indicate that the system service is about to stop running.

S304: The service requester releases the second node.

In some embodiments, the service requester may call a ReleaseHandle function to release the second node.

In some embodiments, that the service requester releases the second node may be understood as follows: The service requester releases a handle of the system service, or the service requester marks that the system service is invalid, and the service requester may release a resource occupied by the second node.

In some embodiments, for example, one system service may be used to provide a plurality of sub-services, and the sub-services may include, for example, monitoring CPU usage, memory usage, and disk space usage. Monitoring the CPU usage may be referred to as a first sub-service, monitoring the memory usage may be referred to as a second sub-service, and monitoring the disk space usage may be referred to as a third sub-service. The service requester requests to use the first sub-service provided by the system service. In this example, that the service requester releases the second node may be understood as follows: The service requester releases a resource occupied by the first sub-service. Similarly, in S206, releasing the resource occupied by the system service may be understood as: releasing the resource occupied by the first sub-service, a resource occupied by the second sub-service, and a resource occupied by the third sub-service.

S305: The Binder driver deletes the second node.

S306: The Binder driver updates a reference count of the first node, and the Binder driver deletes the first node when the reference count of the first node is 0.

S307: The Binder driver sends a reference count update indication to the system service, where the reference count change indication indicates to update a reference count of the system service.

S308: The system service updates the reference count of the system service in response to the reference count change indication, and the system service stops running when the reference count of the system service is 0.

For S305 to S308, refer to the descriptions in S203 to S206.

In some embodiments, when the service requester perceives that the system service stops running, different service requesters perform different operations.

For example, the system service may provide the first sub-service, the second sub-service, and the third sub-service. The service requester requests to use the first sub-service provided by the system service. When the system service requests to stop running, the Binder driver may notify the service requester. In this way, the service requester may determine that the system service stops running, and when requesting to use the first sub-service next time, the service requester may re-obtain the handle of the system service, to ensure that the first sub-service is used, and ensure normal execution of a task of the service requester.

For example, the system service is a Bluetooth system service. When the Bluetooth system service requests to stop running, the Binder driver may notify a service requester that uses the Bluetooth system service. In this way, the service requester may determine that the Bluetooth system service stops running, and the service requester may trigger a display not to display a Bluetooth identifier in a status bar of the electronic device. Similarly, for example, the system service may be a Wi-Fi system service. When the Wi-Fi system service requests to stop running, the Binder driver may notify a service requester that uses the Wi-Fi system service. In this way, the service requester may determine that the Wi-Fi system service stops running, and the service requester may trigger a display not to display a Wi-Fi identifier in a status bar of the electronic device.

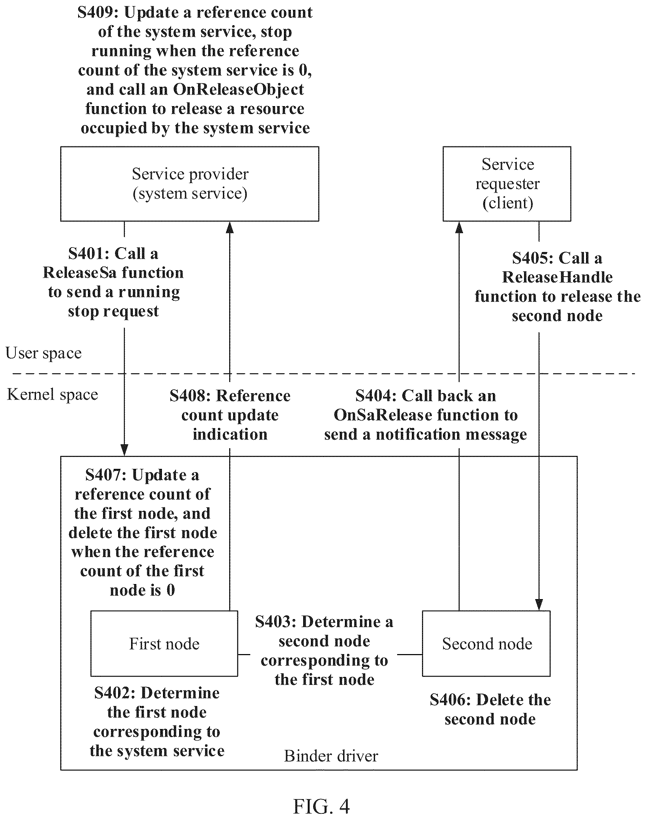

In some embodiments, based on a structure of the electronic device (as shown in FIG. 1) provided in embodiments of this application, the system service control method provided in embodiments of this application is described with reference to FIG. 4. FIG. 4 is a schematic flowchart of a system service control method according to another embodiment of this application.

Refer to FIG. 4. The system service control method provided in this embodiment of this application may include the following steps.

S401: A system service calls a ReleaseSa function to send a running stop request to a Binder driver.

S402: The Binder driver determines a first node corresponding to the system service.

S403: The Binder driver determines, based on a red-black tree, a second node corresponding to the first node.

S404: The Binder driver indicates the second node to call back an OnSaRelease function to send a notification message to a service requester.

S405: The service requester calls a ReleaseHandle function to release the second node.

S406: The Binder driver deletes the second node.

S407: The Binder driver updates a reference count of the first node, and deletes the first node when the reference count of the first node is 0.

S408: The Binder driver sends a reference count update indication to the system service.

S409: The system service updates a reference count of the system service, and when the reference count of the system service is 0, the system service calls an OnReleaseObject function to stop running.

For S401 to S409, refer to the descriptions in S301 to S308.

It should be understood that FIG. 4 does not show another first node corresponding to a service provider, and shows only a first node corresponding to one system service provided by the service provider.

In this embodiment of this application, when the system service actively requests to stop running, the Binder driver may notify the service requester that uses the system service, so that the service requester can sense that the system service stops running. In this way, the service requester can perform a corresponding operation, to avoid a task exception of the service requester.

In some embodiments, in the following scenarios, when the system service actively requests to stop running, even if the Binder driver does not notify the service requester that uses the system service, task execution of the service requester is not affected.

A scenario 1 is used as an example.

In some embodiments, each time the service requester uses the system service provided by the system service, the service requester may be configured to re-obtain a handle of the system service. It should be understood that, after the system service stops running, the handle that has been obtained by the service requester is invalid. When the service requester uses the system service provided by the system service, because the handle that has been obtained by the service requester is invalid, the service requester cannot continue to use the system service to execute a task, causing the task exception. However, each time when the service requester uses the system service provided by the system service, if the service requester is configured to re-obtain the handle of the system service, even if the system service stops running, the service requester re-obtains the handle of the system service when using the system service next time, and the service requester uses the system service to execute the task. This can ensure smooth execution of the task.

A scenario 2 is used as an example.

In some embodiments, the service requester may register a listening service in a SAMgr in advance, and the listening service is used to listen to running stop of the system service. After the service requester registers the listening service in the SAMgr, when the system service stops running, the SAMgr may send, to the service requester, a notification message indicating that the system service stops running. In this way, the service requester may also determine that the system service stops running.

In some embodiments, the service requester may register the listening service in the SAMgr after installation, or the service requester may register the listening service in the SAMgr when the service requester is started for the first time. This is not limited in embodiments of this application.

In the foregoing two scenarios, although the Binder driver does not notify the service requester that uses the system service when the system service actively requests to stop running, the service requester may re-obtain the handle when using the system service next time, or may determine, by using the SAMgr, that the system service stops running, or may re-obtain the handle when using the system service next time. Therefore, even if the Binder driver does not notify the service requester that uses the system service, task execution of the service requester is not affected.

In an embodiment, in the foregoing two scenarios, because the Binder driver does not notify the service requester that uses the system service, the SAMgr may release the second node to release a resource occupied by the second node.

In this embodiment of this application, each time the service requester uses the system service provided by the system service, if the service requester is configured to re-obtain the handle of the system service, or the service requester may register the listening service in the SAMgr in advance, when the system service stops running, the Binder driver may not notify the service requester that uses the system service. The system service may re-obtain the handle when using the system service next time, or the SAMgr is used to determine that the system service stops running so that the handle can be re-obtained when the system service is used next time. Therefore, task execution of the service requester is not affected.

In some embodiments, the embodiments in FIG. 2 to FIG. 4 are applicable to a native system service, a Java system service, and another system service. In some embodiments, the electronic device may include a system service management module. For example, when the electronic device may use an IPC technology, the system service management module may be the Binder driver.

In some embodiments, the system service control method provided in embodiments of this application is further applicable to another system architecture. For example, in an RPC communication system structure, the electronic device may include the system service management module, and the system service management module may be a soft bus. In some embodiments, when the system service is the Java system service, the system service management module may be an AMS.

It should be understood that when the system service is another type of system service, the system service management module may be another module in the electronic device. The system service management module is not exhaustive in embodiments of this application.

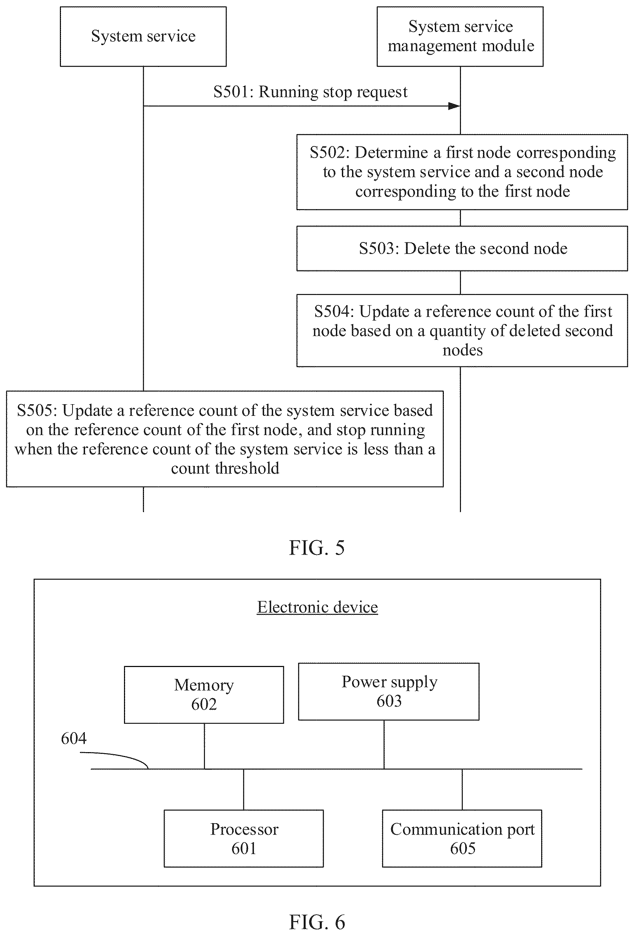

Refer to FIG. 5. A system service control method provided in an embodiment of this application may include the following steps.

S501: A system service sends a running stop request to a system service management module.

For S501, refer to the descriptions in S201.

S502: In response to the running stop request, the system service management module determines a first node corresponding to the system service and a second node corresponding to the first node.

In some embodiments, the system service management module may store a red-black tree, and the system service management module may determine, based on the red-black tree, the second node corresponding to the first node. Refer to the related descriptions of the Binder driver in S202.

S503: The system service management module deletes the second node.

For S503, refer to the descriptions in S203.

S504: The system service management module updates a reference count of the first node based on a quantity of deleted second nodes.

S505: The system service updates a reference count of the system service based on the reference count of the first node, and stops running when the reference count of the system service is less than a count threshold.

In some embodiments, for S504, refer to the descriptions in S204 to S206.

For example, when the system service management module deletes one second node, the system service management module may decrease the reference count of the first node by 1. Because the first node corresponds to the system service, the system service may also decrease the reference count of the system service by 1 based on an update status of the reference count of the first node. When the system service management module deletes two second nodes, the system service management module may decrease the reference count of the first node by 2. Correspondingly, the system service may also decrease the reference count of the system service by 2 based on an update status of the reference count of the first node.

The system service corresponds to the first node, and the reference count of the system service may be equal to the reference count of the first node. For example, when the system service management module deletes one second node, the system service management module may decrease the reference count of the first node by 1. Because the first node corresponds to the system service, the system service may update the reference count of the system service based on the reference count of the first node. For example, the reference count of the first node is decreased from 2 to 1, and the system service may decrease the reference count of the system service from 2 to 1.

In this embodiment of this application, when the reference count of the system service is less than the count threshold, the system service may stop running. For example, the count threshold may be 1. When the reference count of the system service is 0, the system service stops running. Refer to the descriptions in S206.

The system service control method provided in embodiments of this application has a same technical principle and technical effect as those in the foregoing embodiment. Refer to the descriptions in the foregoing embodiment.

It should be noted that data (including but not limited to data used for analysis, stored data, displayed data, and the like) in this application are information and data for which an authorization is obtained from a user or a full authorization is obtained from each party, and the collection, use, and processing of related data need to comply with related laws, regulations, and standards of related countries and regions. Corresponding operation entries are provided for the user to choose to authorize or deny.

In an embodiment, an embodiment of this application further provides an electronic device. Refer to FIG. 6. The electronic device may include a processor 601 (for example, a CPU) and a memory 602. The memory 602 may include a high-speed random access memory (random access memory, RAM), or may include a non-volatile memory (non-volatile memory, NVM), for example, at least one disk memory. The memory 602 may store various instructions, to complete various processing functions and implement the method steps of this application.

Optionally, the electronic device in this application may further include a power supply 603, a communication bus 604, and a communication port 605. The communication port 605 is configured to implement a connection and communication between the electronic device and another peripheral device. In this embodiment of this application, the memory 602 is configured to store computer-executable program code. The program code includes instructions. When the processor 601 executes the instructions, the instructions cause the processor 601 of the electronic device to perform the actions in the foregoing method embodiments. Implementation principles and technical effects thereof are similar. Details are not described herein again.

It should be noted that the modules or components in the foregoing embodiments may be configured as one or more integrated circuits for implementing the foregoing methods, for example, one or more application-specific integrated circuits (application-specific integrated circuit, ASIC), one or more digital signal processors (digital signal processor, DSP), or one or more field programmable gate arrays (field programmable gate array, FPGA). For another example, when one of the foregoing modules is implemented in a form of scheduling program code by a processing element, the processing element may be a general-purpose processor, for example, a central processing unit (central processing unit, CPU) or another processor that can call the program code, for example, a controller. For another example, the modules may be integrated together and implemented in a form of a system-on-a-chip (system-on-a-chip, SOC).

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid-State Disk (SSD)), or the like.

The term "a plurality of" in this specification refers to two or more. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects, and the character "/" in a formula indicates a "division" relationship between associated objects. In addition, it should be understood that, in descriptions of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

## Claims

1. A system service control method, applied to an electronic device, wherein the method comprises:
receiving, by a system service management module, a running stop request from a system service;
in response to the running stop request, determining, by the system service management module, a first node corresponding to the system service and a second node corresponding to the first node;
deleting, by the system service management module, the second node;
updating, by the system service management module, a reference count of the first node based on a quantity of deleted second nodes; and
updating, by the system service, a reference count of the system service based on the reference count of the first node, and stopping running when the reference count of the system service is less than a count threshold.

2. The method according to claim 1, wherein the method further comprises:
running a service process, wherein at least one system service runs in the service process.

3. The method according to claim 1 or 2, wherein that the system service sends the running stop request to the system service management module comprises:
sending, by the system service, the running stop request to the system service management module when all service requesters terminate referencing the system service; or
sending, by the system service, the running stop request to the system service management module when the system service determines not to execute a task.

4. The method according to claim 3, wherein that the system service determines not to execute the task comprises:
the system service is an upgrade system service, and when the upgrade system service completes execution of an upgrade task, the upgrade system service determines not to execute a task; or
the system service is a Bluetooth system service, and when the Bluetooth system service determines that a Bluetooth option of the electronic device has been turned off, or the electronic device does not establish a Bluetooth connection to another device, the Bluetooth system service determines not to execute a task; or
the system service is a Wi-Fi system service, and when the Wi-Fi system service determines that a Wi-Fi option of the electronic device has been turned off, or the electronic device does not establish a Wi-Fi connection to another electronic device, the Wi-Fi system service determines not to execute a task; or
when the system service is a system service used to provide a distributed service, when the system service determines that a communication option of the electronic device has been turned off, or the electronic device does not establish a communication connection to another electronic device, the system service determines not to execute a task.

5. The method according to any one of claims 1 to 4, wherein the system service management module comprises a Binder driver;
determining, by the system service management module, the first node corresponding to the system service and the second node corresponding to the first node comprises:
determining, by the Binder driver, the first node corresponding to the system service, and determining, based on an association relationship between the first node and the second node, the second node corresponding to the first node;
after updating the reference count of the first node, the method further comprises:
sending, by the Binder driver, a reference count update indication to the system service, wherein the reference count update indication indicates a quantity of reduced reference counts of the system service; and
updating, by the system service, the reference count of the system service based on the reference count of the first node, and stopping running when the reference count of the system service is less than the count threshold comprises:
updating, by the system service, the reference count of the system service in response to the reference count update indication; and
when the reference count of the system service is less than the count threshold, calling, by the system service, a running stop function to release a resource occupied by the system service.

6. The method according to claim 5, wherein the count threshold is 1.

7. The method according to claim 5 or 6, wherein after updating the reference count of the first node, the method further comprises:
deleting, by the Binder driver, the first node when the reference count of the first node is 0.

8. The method according to any one of claims 1 to 7, wherein the service requester is configured to re-obtain a handle of the system service each time the system service is referenced.

9. The method according to claim 8, wherein the electronic device comprises a system ability manager, and the method further comprises:
registering, by the service requester, a listening service with the system ability manager, wherein the listening service is used to listen to running stop of the system service; and
when the system service stops running, sending, by the system ability manager, a notification message indicating that the system service stops running to the service requester.

10. The method according to any one of claims 5 to 7, wherein after determining the second node corresponding to the first node, the method further comprises:
sending, by the Binder driver, a notification message to the service requester, wherein the notification message indicates that the system service request stops running; and
releasing, by the service requester, the second node.

11. The method according to any one of claims 5 to 7, wherein a first interface is deployed in the electronic device, and the method further comprises:
calling, by the system service, the first interface, to send the running stop request to the Binder driver.

12. The method according to claim 10, wherein a second interface is deployed in the electronic device, and sending, by the Binder driver, the notification message to the service requester comprises:
indicating, by the Binder driver, the second node to call the second interface, to send the notification message to the service requester.

13. An electronic device, comprising a processor and a memory, wherein
the memory stores computer-executable instructions; and
the processor executes the computer-executable instructions stored in the memory, to enable the processor to perform the method according to any one of claims 1 to 12.

14. A computer-readable storage medium, wherein the computer-readable storage medium stores a computer program or instructions, and when the computer program or the instructions are run, the method according to any one of claims 1 to 12 is implemented.
